# EUROPÄISCHE PATENTSCHRIFT

(11) **EP 0 722 083 B1**
(45) Veröffentlichungstag und Bekanntmachung des Hinweises auf die Patenterteilung: **09.07.2003**
(21) Anmeldenummer: 95120341.3
(22) Anmeldetag: 21.12.1995
(51) Int. Cl.: G01N 1/28, B01L 3/02

(54) **Verfahren und Vorrichtung zum Entnehmen und Ausstreichen von Flüssigkeiten**
Method and device for sampling and smearing liquids
Procédé et dispositif de prélèvement et d'épandage de liquides

(30) Priorität: 13.01.1995 DE 19500915
(43) Veröffentlichungstag der Anmeldung: 17.07.1996
(73) Patentinhaber: Sarstedt AG & Co., 51588 Nümbrecht (DE)
(72) Erfinder: Sarstedt,Walter, D-51588 Nümbrecht (DE); Pfeiffer, Matthias, Dr., D-82541 Münsing/Ambach (DE); Henkel, E., Prof. Dr. med, D-30627 Hannover (DE)
(74) Vertreter: Valentin, Ekkehard, Dipl.-Ing.

(56) Entgegenhaltungen:
- US-A- 4 030 341
- US-A- 4 378 333
- US-A- 4 563 104
- US-A- 5 286 453

## Beschreibung

Die Erfindung betrifft ein Verfahren und eine Vorrichtung gemäß Oberbegriff der unabhängigen
Ansprüche.

Zur Untersuchung von Blut oder anderen Serum- bzw. Flüssigkeitsproben, z.B. Liquor oder Pleurapunktat, wird ein Tropfen dieser Probe auf einen plattenartigen Objektträger aufgetragen, danach durch ein gleichmäßiges Ziehen des Ausstreichers in Längsrichtung des Objektträgers verteilt bzw. ausgestrichen und anschließend unter dem Mikroskop betrachtet.

Durch die US-Patentschriften 3 366 278, 5 163 583 und 5 286 453 ist es bekanntgeworden, die zu untersuchende Flüssigkeit aus geschlossenen Behältern, insbesondere länglichen Röhrchen, zu entnehmen. Hierzu wird ein das offene Ende des Röhrchens verschließender elastischer Stopfen bzw. eine Membrane mit einer einen durchgehenden Längskanal aufweisenden Nadel eines Tropfers durchstochen, die somit in das Behälterinnere eintaucht. Es entsteht daher über den Längskanal der Tropfernadel eine Verbindung zwischen dem Behälterinneren und der Umgebung, so daß ein Flüssigkeitstropfen entnommen und auf den Objektträger abgelegt werden kann.

Das gleichmäßige Ausstreichen bzw. Verteilen der tropfenformig aufgebrachten Flüssigkeit läßt sich durch einen zweiten Objektträger erreichen, nämlich einem - gegebenenfalls besonders geschliffene - Ausstreichkanten aufweisenden Ausstreicher aus Glas oder Kunststoff, beispielsweise wie aus dem DE-U 92 142 227.3 bekannt.

Der zwingend notwendige Einsatz sowohl eines Tropfers als auch eines Ausstreichers macht es erforderlich, nach deren Gebrauch entsprechend stets mehrere Gegenstände speziell zu entsorgen, denn gerade bei Serum- oder Blutuntersuchungen läßt sich nicht ausschließen, daß diese Gegenstände durch den Kontakt mit möglicherweise infektiösen Proben kontaminiert sind. Diese Gegenstände gehören damit zum Sondermüll, dessen Entsorgung einen hohen Aufwand und Kosten verursacht.

Der Erfindung liegt daher die Aufgabe zugrunde, ein Verfahren und eine Vorrichtung zu schaffen, mit denen sich das Ausstreichen des Flüssigkeitstropfens vereinfachen und der zur Entsorgung anfallende Sondermüll auf ein Minimum reduzieren läßt.

Diese Aufgabe wird erfindungsgemäß mit einem Verfahren auf verblüffend einfache Weise dadurch gelöst, daß der Flüssigkeitstropfen auf dem Objektträger mit dem Tropfer ,der einstückig mit einem Ausstreichermittel ausgebildet ist, ausgestrichen und verteilt wird. Durch die Maßnahme, den Tropfer selbst als Ausstreicher zu verwenden, läßt sich der mit einer gegebenenfalls infektiösen Flüssigkeitsprobe in Kontakt kommende Geräteaufwand auf lediglich ein Teil beschränken, so daß das zu entsorgende Abfallvolumen entscheidend verringert wird, da ein zweiter Objektträger bzw. ein separater Ausstreicher entbehrlich ist. Die Idee, einen Tropfer zu verwenden, der enstückig mit einem Ausstreichermittel ausgebildet ist, ist aus der Patentschrift US-A- 4378 333 bekannt. Die darin offenbarte Vorrichtung weist jedoch keinen durchgehenden Längskanal auf.

Der Tropfer kann beispielsweise an seinem von dem Behalter entfernten, vorderen Ende mit einem radial vorspringenden Ausstreicheransatz bzw. -steg versehen sein, der die zum Verteilen des Flüssigkeitstropfen auf dem Objektträger benötigte Ausstreichkante bereitstellt. Zur Verteilung des Flüssigkeitstropfens ist es gleichermaßen möglich, entweder den Tropfer vor dem Ausstreichen von dem Behälter-nachfolgend Probenröhrchen genannt - abzuziehen oder den Tropfer in seiner Aufstecklage auf dem Probenröhrchen zu belassen, je nachdem was gewünscht wird und im konkreten Fall die gunstigere Handhabung gestattet.

Weitere Einzelheiten und Vorteile der Erfindung ergeben sich aus den Ansprüchen und der nachfolgenden Beschreibung, in der ein in den Zeichnungen dargestelltes Ausführungsbeispiel des Gegenstandes der Erfindung näher erläutert ist. Es zeigen:
- Fig. 1: in explosiver, vereinfachter Darstellung im Teil-Längsschnitt eine Vorrichtung zum Entnehmen eines Flüssigkeitstropfens aus einem Probenröhrchen und Abgeben bzw. Auftragen auf einen Objektträger; und
- Fig. 2: die Vorrichtung nach Fig. 1 in einer Stellung zum Ausstreichen und Verteilen des aufgetragenen Flüssigkeitstropfens auf der Oberfläche des Objektträgers, vereinfacht dargestellt.

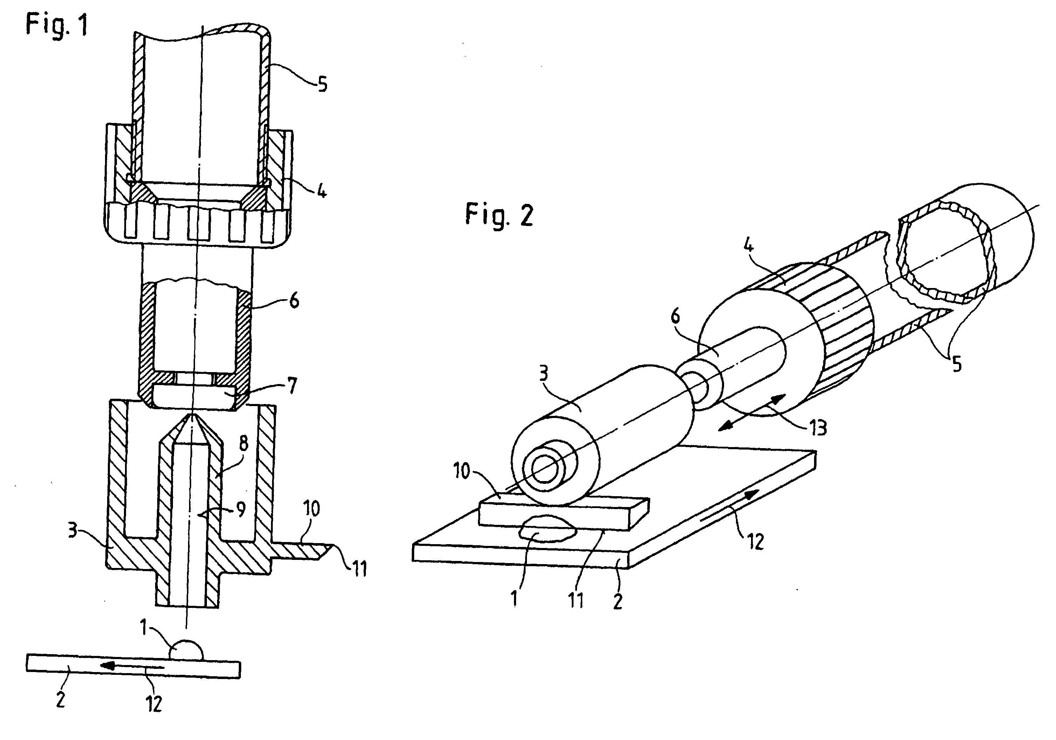

Zum Auftragen eines Flüssigkeitstropfens 1 auf einen plattenartigen Objektträger 2 (vgl. auch Fig. 2) wird gemäß Fig. 1 ein Tropfer 3 auf das durch eine Schraubkappe 4 verschlossene Ende eines die Flüssigkeit, insbesondere Blut, enthaltenden geschlossenen Probenrohrchens 5 aufgesteckt. Die Schraubkappe 4 besitzt einen das Probenröhrchen 5 verlängernden, zylindrischen Ansatz 6, der einen das Innere des Röhrchens 5 verschließenden, elastischen Verschlußstopfen 7 (Membrane) aufnimmt.

Beim Aufstecken des Tropfers 3 auf den zylindrischen Ansatz 6 der auf das Probenröhrchen 5 aufgeschraubten Kappe 4 wird der Verschlußstopfen 7 von einer einem durchgehenden Längskanal 9 aufweisenden Tropfernadel 8 durchdrungen, so daß das angespitzte hintere Ende der Tropfernadel 8 in das Innere des Probenröhrchens 5 bzw. des damit in Verbindung stehenden Ansatzes 6 eintaucht; das elastische Material des Verschlußstopfens bzw. der Membrane 7 legt sich hierbei dichtend um die Tropfernadel 8. Es wird folglich eine Fluidverbindung zwischen dem Inneren des Probenröhrchens 5 und der Umgebung hergestellt, und über den Längskanal 9 der Tropfernadel 8 gelangt der Flüssigkeitstropfen 1 auf den Objektträger 2 (vgl. Fig. 1).

Der Tropfer 3 ist einstückig mit einem Ausstreichermittel 10 versehen, das im Ausführungsbeispiel in Form eines an seinem von dem Dom bzw. Ansatz 6 der Schraubkappe 4 entfernten, vorderen Ende mit einem radial vorspringenden, den Tropfer quer zu dessen Längsrichtung beidseitig überragenden Ausstreichersteg ausgebildet ist; die Einstückigkeit kann hierbei gegebenenfalls auch dadurch erreicht werden, daß das Ausstreichermittel 10 - wenn es nicht vorzugsweise schon gleich bei der Herstellung des Tropfers an diesem vorgesehen wird - mit dem Tropfer 3 verrastet wird. Das Ausstreichermittel 10 stellt eine für das feine Verteilen des Flüssigkeitstropfens 1 auf dem Objektträger 2 sorgende Ausstreichkante 11 bereit. Der Tropfer 3 erfüllt außer seiner Funktion zum Entnehmen und Auftragen des Flüssigkeitstropfens 1 auf den Objektträger 2 somit weiterhin noch die Funktion eines Ausstreichers.

Zum Ausstreichen des Flüssigkeitstropfens 1 nimmt der Tropfer 3 beispielsweise die in Fig. 2 dargestellte Lage ein, in der er in Pfeilrichtung 12 im wesentlichen parallel zum Objektträger 2 bewegt wird und die Flüssigkeit damit in vorteilhafter Weise während einer Ziehbewegung auf eine der Abmessung der Ausstreichkante 11 entsprechenden Breite über die Länge des Objektträges 2 verteilt. Dies kann - wie in Fig. 2 dargestellt - bei von dem Tropfer 3 abgenommenen Probenröhrchen 5, d.h. durch Ergreifen des Mantels des Tropfers 3, oder auch bei auf den Tropfer 3 aufgestecktem Probenröhrchen 5 geschehen, was durch den Doppelpfeil 13 symbolhaft verdeutlicht werden soll. In letzterem, in der Zeichnung gezeigten Fall ergibt sich eine vorteilhafte steife, stabile, formschlüssige Verbindung zwischen dem Tropfer 3 und dem Probenröhrchen 5, weil der auf den Ansatz 6 aufgeschobene bzw. -gesteckte Tropfer 3 von dem Ansatz 6 geführt wird, was auch das Ausstreichen des Flüssigkeitstropfens 1 begünstigt. Alternativ ist es möglich, den Tropfer 3 direkt auf der Wandung des Probenröhrchens 5 oder auch mittelbar auf einer Kappe - die keine Schraubkappe zu sein braucht - des Probenröhrchens 5 zu führen; die Membrane bzw. der Verschluß 7 ist dann ein integrierter Bestandteil des Probenröhrchens bzw. der Kappe.

Gleichwohl wird jedoch stets erreicht, daß nur ein Vorrichtungsteil mit dem Flüssigkeitstropfen 1 in Berührung kommt, nämlich der einstückig mit dem Ausstreichermittel 10 ausgebildete Tropfer 3. Das bedeutet, daß lediglich ein Geräte- bzw. Vorrichtungsteil entsorgt werden muß und als Sondermüll anfällt, nämlich lediglich der gleichzeitig auch als Ausstreicher einzusetzende Tropfer 3.

## Patentansprüche

1. Verfahren zum Entnehmen von Flüssigkeiten, insbesondere Blut, in geringen Mengen aus geschlossenen Behältern und Abgeben als Flüssigkeitstropfen (1) auf einen Objektträger mittels eines Tropfers und anschließendem Ausstreichen des Tropfens, wobei dieser Tropfer eine einen durchgehenden Längskanal (9) aufweisende Tropfernadel (8) besitzt und das eine Ende dieser Tropfernadel durch den Verschluß in das Behälterinnere gedrückt wird und ein Flüssigkeitstropfen aus dem Behälter über den Längskanal und das andere Ende der Tropfernadel auf den Objektträger gelangt,
**dadurch gekennzeichnet,**
**daß** der Tropfer (3), der einstückig mit einem Ausstreichermittel (10) ausgebildet ist, verwendet wird, um den Flüssigkeitstropfen auf dem Objektträger mit dem Tropfer auszustreichen und zu verteilen.

2. Vorrichtung zum Entnehmen von Flüssigkeiten, insbesondere Blut, in geringen Mengen aus geschlossenen Behältern und Abgeben als Flüssigkeitstropfen (1) auf einen Objektträger (2) und das andere Ende mittels eines Tropfers und anschließendem Ausstreichen des Tropfens, wobei dieser Tropfer eine einen durchgehenden Längskanal (9) aufweisende Tropfernadel (8) besitzt und das eine Ende dieser Tropfernadel durch den Verschluß in das Behälterinnere gedrückt wird und ein Flüssigkeitstropfen aus dem Behälter über den Längskanal und das andere Ende der Tropfernadel auf den Objektträger gelangt,
**dadurch gekennzeichnet,**
**daß** der Tropfer (3) einstückig mit einem Ausstreichermittel (10) zum Ausstreichen und Verteilen des Tropfens auf dem Objektträger ausgebildet ist.

## Claims

1. A method for the removal of fluids, especially blood, in small amounts from closed containers and delivery as a drop of fluid (1) on a slide by means of a dropper and subsequent spreading of the drop wherein this dropper has a dropper needle (8) having a longitudinal through channel (9) and one end of this dropper needle is pressed through the seal into the interior of the container and a drop of fluid passes from the container via the longitudinal channel and the other end of said dropper needle onto the slide,
**characterised in that**
the dropper (3) which is constructed integrally with a spreading means (10) is used to spread and distribute the drop of fluid on the slide with the dropper.

2. An apparatus for the removal of fluids, especially blood, in small amounts from closed containers and delivery as a drop of fluid (1) on a slide (2) by means of a dropper and subsequent spreading of the drop, wherein this dropper has a dropper needle (8) having a longitudinal through channel (9) and one end of said dropper needle is pressed through the seal into the interior of the container and a drop of fluid passes from the container via the longitudinal channel and the other end of said dropper needle onto the slide,
**characterised in that**
the dropper (3) is constructed integrally with a spreading means (10) for spreading and distributing the drop on the slide.

## Revendications

1. Procédé de prélèvement de liquides, notamment de sang, en faibles quantités, dans des récipients fermés et de dépôt sous forme de gouttes de liquide (1) sur un support d'objet au moyen d'un goutteur et étalement consécutif de la goutte, ce goutteur possédant une aiguille de goutteur (8) présentant un canal longitudinal continu (9) et l'un des bouts de cette aiguille de goutteur étant poussé par le bouchon dans l'intérieur du récipient et une goutte de liquide provenant du récipient arrivant par le canal longitudinal et l'autre bout de l'aiguille du goutteur sur le support d'objet,
**caractérisé en ce que**
le goutteur (3), qui est conformé en une pièce avec un moyen d'étalement (10), est utilisé pour étaler et répartir la goutte de liquide sur le support d'objet avec le goutteur.

2. Dispositif de prélèvement de liquides, notamment de sang, en faibles quantités, dans des récipients fermés et de dépôt sous forme de gouttes de liquide (1) sur un support d'objet (2) et l'autre bout au moyen d'un goutteur et étalement consécutif de la goutte, ce goutteur possédant une aiguille de goutteur (8) présentant un canal longitudinal continu (9) et l'un des bouts de cette aiguille de goutteur étant poussé par le bouchon dans l'intérieur du récipient et une goutte de liquide provenant du récipient arrivant par le canal longitudinal et l'autre bout de l'aiguille du goutteur sur le support d'objet,
**caractérisé en ce que**
le goutteur (3) est conformé en une pièce avec un moyen d'étalement (10), servant à étaler et répartir la goutte de liquide sur le support d'objet.
